# EUROPÄISCHE PATENTSCHRIFT

(11) **EP 2 023 107 B1**
(45) Veröffentlichungstag und Bekanntmachung des Hinweises auf die Patenterteilung: **19.09.2012**
(21) Anmeldenummer: 08009764.5
(22) Anmeldetag: 29.05.2008
(51) Int. Cl.: G01K 17/06, G01D 4/00

(54) **Elektronischer Heizkostenverteiler**
Electronic heating cost distributor
Répartiteur électronique de coûts de chauffage

(30) Priorität: 02.08.2007 DE 102007036344
(43) Veröffentlichungstag der Anmeldung: 11.02.2009
(73) Patentinhaber: QUNDIS GmbH, 99974 Mühlhausen (DE)
(72) Erfinder: Woehrstein, Hermann, 78052 Villingen-Schwenningen (DE); Hinz, Fred, 78112 St. Georgen (DE)
(74) Vertreter: Liedtke, Klaus

(56) Entgegenhaltungen:
- WO-A2-2006/021963
- DE-U1- 20 114 968
- DE-U1- 29 719 339
- US-A- 4 167 733
- US-A1- 2006 226 825

## Beschreibung

Die Erfindung betrifft eine Verwendung eines Sensors eines elektronischen Heizkostenverteilers nach dem Oberbegriff des Anspruchs 1.

Das Grundprinzip eines elektronischen Heizkostenverteilers besteht darin, die von einem Heizkörper abgegebene Wärmemenge zu messen, damit dann eine umlagefähige Berechnung der Heizkosten vorgenommen werden kann. Eine Alternative zu den elektronischen Heizkostenverteilern stellen die Verdunstungsröhrchen dar.

Das Grundprinzip des elektronischen Heizkostenverteilers besteht darin, daß dieser mit einer elektronischen Meßeinrichtung zum Messen der Temperatur eines Heizkörpers ausgestattet ist. Dabei ist das Gehäuse des elektronischen Heizkostenverteilers fest mit dem Heizkörper verbunden. Die Meßwerte werden dabei in einem elektronischen Speicher gespeichert. Die Datenübertragung der gespeicherten Daten erfolgt dabei entweder per Funk an eine zentrale Empfangsstelle oder es besteht aber auch die Möglichkeit, daß die gespeicherten Daten von Zeit zu Zeit direkt aus dem elektronischen Heizkostenverteiler ausgelesen werden.

Im Manipulationsfall können nicht nur die elektronischen Heizkostenverteiler demontiert, sondern gleich der komplette Heizkörper einschließlich des elektronischen Heizkostenverteilers ausgetauscht werden. Dies gilt es im Bedarfsfall nachzuweisen.

Die DE 201 14 968 U1 zeigt eine Befestigungsvorrichtung zur Anbringung eines ein Vorderteil und ein Rückteil aufweisenden Heizkostenverteilers an einem Heizkörper. Dabei wird das Rückteil des Heizkostenverteilers über eine Klebeschicht fest mit dem Heizkörper verbunden. Um Manipulationen dahingehend feststellen zu können, daß der Heizkostenverteiler von dem Heizkörper entfernt worden ist, ist eine Sicherungsvorrichtung vorgesehen. Diese Sicherungsvorrichtung kann als ein eine Veränderung der Position und/oder der Ausrichtung des Heizkostenverteilers detektierender Sensor ausgebildet sein.

Aus der DE 297 19 339 U1 ist eine Vorrichtung zur Erfassung und Auswertung von temperaturabhängigen Verbrauchs- oder Meßwerten oder anderer physikalischer Größen bekannt. Dabei ist in einem Gehäuse als Manipulationsschutz ein Schaltelement vorgesehen, das bei Entfernen des Vorderteils des Gehäuses ein Öffnen dieses Gehäuses detektiert. Weiterhin ist eine einen Teil des Rückteils abgrenzende Sollbruchstelle vorgesehen. Hierdurch löst sich bei gewaltsamer Entfernung des üblicherweise an dem Heizkörper festgeklebten Heizkostenverteilers dieses Teil von dem Rückteil und verbleibt an dem Heizkörper.

Der Erfindung liegt daher die Aufgabe zugrunde, bei einem elektronischen Heizkostenverteiler eine Manipulationssicherung zu schaffen, daß bei einem Austausch des kompletten Heizkörpers einschließlich des daran dauerhaft befestigten elektronischen Heizkostenverteilers dieser Manipulationsfall nachgewiesen werden kann.

Die technische Lösung ist gekennzeichnet durch die Merkmale im Kennzeichen des Anspruchs 1.

Dadurch ist ein manipulationssicherer, am Heizkörper befestigter elektronischer Heizkostenverteiler geschaffen, bei dem der komplette Heizkörper (also einschließlich des elektronischen Heizkostenverteilers) überwacht wird. Die Grundidee besteht darin, den elektronischen Heizkostenverteiler mit einem - zusätzlichen - Sensor auszustatten, welcher Bewegungen des Heizkostenverteilers und damit des Heizkörpers detektiert. Denn derartige Bewegungen treten dann auf, wenn der Heizkörper ausgetauscht wird.

Vorzugsweise handelt es sich gemäß der Weiterbildung in Anspruch 2 bei dem Sensor um einen Neigungssensor. Dieser detektiert somit, wenn der Heizkörper eine Neigungsbewegung vollführt. Diese Neigungsbewegungen treten dann zwangsläufig auf, wenn der Heizkörper ausgetauscht wird. Denn es ist praktisch nicht durchführbar, daß der Heizkörper beim Austausch immer eine horizontale Stellung einnimmt.

Alternativ kann auch als Sensor gemäß Anspruch 3 ein Vibrationssensor oder gemäß Anspruch 4 ein Beschleunigungssensor vorgesehen sein.

Die Weiterbildung gemäß Anspruch 5 geht von elektronischen Heizkostenverteilern aus, welche per Funk ihre Daten an eine Zentrale senden. Sofern daher der Sensor eine Bewegung detektiert, kann dies sofort an die Zentrale per Funk weitergeleitet werden.

Die Alternative gemäß Anspruch 6 geht hingegen davon aus, daß die Daten des Sensors permanent gespeichert werden, so daß dann bei der jährlichen Auslesung die Manipulation festgestellt werden kann.

Ein Ausführungsbeispiel eines erfindungsgemäßen Heizkostenverteilers wird nachfolgend anhand der Zeichnungen beschrieben. In diesen zeigt:
- Fig. 1: einen Heizkörper mit einem elektronischen Heizkostenverteiler;
- Fig. 2: der Heizkostenverteiler in Fig. 1 in einer vergrößerten Darstellung.

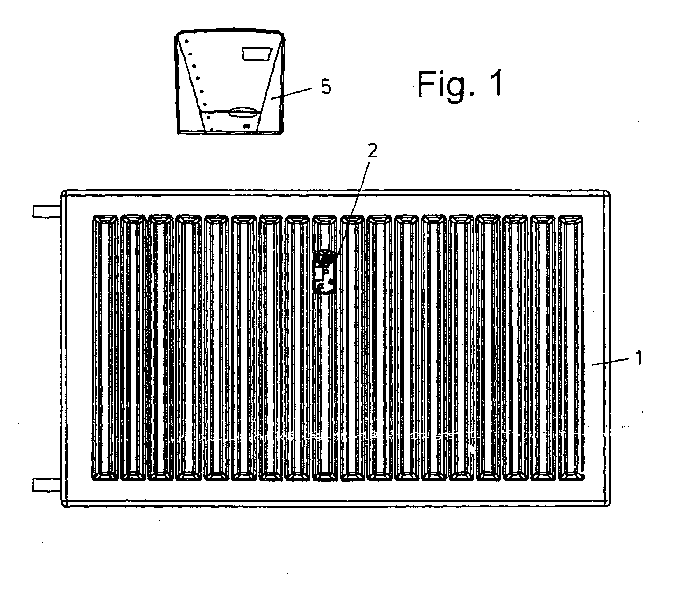

In Fig. 1 ist ein herkömmlicher Heizkörper 1 dargestellt. An diesem ist ein elektronischer Heizkostenverteiler 2 dauerhaft befestigt. Dieser Heizkostenverteiler weist auf seiner Leiterplatte einen Sensor 3 in Form eines Neigungssensors auf.

Die Funktionsweise ist wie folgt:

Wenn der elektronische Heizkostenverteiler 2 vom Heizkörper 1 demontiert wird oder wenn gar der komplette Heizkörper 1 zusammen mit dem elektronischen Heizkostenverteiler 2 gegen einen anderen Heizkörper ausgetauscht wird, spricht der elektronische Sensor 3 in Form des Neigungssensors an. Denn eine Bewegung des Heizkörpers 1 bzw. des elektronischen Heizkostenverteilers 2 ist immer mit einer Schwankungsbewegung verbunden, auf welche der Neigungssensor anspricht.

Da der elektronische Heizkostenverteiler 2 mit einem Sender 4 ausgestattet ist, kann dieser die Signale des Sensors 3 an eine örtlich getrennte Funkzentrale 5 senden und dort Alarm auslösen.

Stattdessen ist es auch möglich, die Signale des Sensors 3 in dem elektronischen Heizkostenverteiler 2 zu speichern und die entsprechenden Daten während der jährlichen Auslesung mit zu übertragen, um dann festzustellen, ob eine Manipulation stattgefunden hat.

### Bezugszeichenliste

- 1: Heizkörper
- 2: elektronischer Heizkostenverteiler
- 3: Sensor
- 4: Sender
- 5: Funkzentrale

## Patentansprüche

1. Verwendung eines Sensors (3) eines elektronischen Heizkostenverteilers (2) zum Detektieren von Bewegungen des elektronischen Heizkostenverteilers (2), wobei der elektronische Heizkostenverteiler (2) an einem Heizkörper (1) befestigt ist und wobei der elektronische Heizkostenverteiler (2) mit einer elektronischen Meßeinrichtung zum Messen der Temperatur des Heizkörpers (1) ausgestattet ist, zum Detektieren von Bewegungen des Heizkörpers (1), an welchem der elektronische Heizkostenverteiler (2) dauerhaft befestigt ist.

2. Verwendung nach Anspruch 1,
**dadurch gekennzeichnet,**
**daß** der Sensor (3) ein Neigungssensor ist.

3. Verwendung nach Anspruch 1,
**dadurch gekennzeichnet,**
**daß** der Sensor (3) ein Vibrationssensor ist.

4. Verwendung nach Anspruch 1,
**dadurch gekennzeichnet,**
**daß** der Sensor (3) ein Beschleunigungssensor ist.

5. Verwendung nach einem der Ansprüche 1 bis 4,
**dadurch gekennzeichnet,**
**daß** die Daten des Sensors (3) permanent an eine zentrale Funkzentrale(5) gesendet werden.

6. Verwendung nach einem der Ansprüche 1 bis 4,
**dadurch gekennzeichnet,**
**daß** die Daten des Sensors (3) permanent in dem Heizkostenverteiler (2) gespeichert und von Zeit zu Zeit ausgelesen werden.

## Claims

1. Use of a sensor (3) of an electronic heat cost allocator (2) for detecting movements of the electronic heat cost allocator (2), in which the electronic heat cost allocator (2) is fastened to a radiator (1) and in which the electronic heat cost allocator (2) is provided with electronic measuring equipment for measuring the temperature of the radiator (1), for detecting movements of of the radiator (1) to which the electronic heat cost allocator (2) is fastened permanently.

2. Use as claimed in claim 1,
**characterized in that**
the sensor (3) is a tilt sensor.

3. Use as claimed in claim 1,
**characterized in that**
the sensor (3) is a vibration sensor.

4. Use as claimed in claim 1,
**characterized in that**
the sensor (3) is an acceleration sensor.

5. Use as claimed in any claim 1 through 4,
**characterized in that**
the data of the sensor (3) are transmitted constantly to a central radio centre (5).

6. Use as claimed in any claim 1 through 4, **characterized in that** the data of the sensor (3) are stored permanently in the heat cost allocator (2) and are read out from time to time.

## Revendications

1. Utilisation d'un capteur (3) d'un répartiteur électronique de coûts de chauffage (2) pour la détection de mouvements dudit répartiteur électronique de coûts de chauffage (2), ledit répartiteur électronique de coûts de chauffage (2) étant fixé à un radiateur (1) et ledit répartiteur électronique de coûts de chauffage (2) étant équipé d'un dispositif de mesure électronique pour la mesure de la température du radiateur (1), afin de détecter des mouvements du radiateur (1) sur lequel le répartiteur électronique de coûts de chauffage (2) est durablement fixé.

2. Utilisation selon la revendication 1,
**caractérisée**
**en ce que** le capteur (3) est un capteur d'inclinaison.

3. Utilisation selon la revendication 1,
**caractérisée**
**en ce que** le capteur (3) est un capteur de vibrations.

4. Utilisation selon la revendication 1,
**caractérisée**
**en ce que** le capteur (3) est un capteur d'accélération.

5. Utilisation selon l'une des revendications 1 à 4,
**caractérisée**
**en ce que** les données du capteur (3) sont adressées en permanence à une centrale radio (5).

6. Utilisation selon l'une des revendications 1 à 4,
**caractérisée**
**en ce que** les données du capteur (3) sont sauvegardées en permanence dans le répartiteur de coûts de chauffage (2) et en ce qu'elles sont lues de temps en temps.
